# FASCICULE DE BREVET EUROPEEN

(11) **EP 0 643 856 B1**
(45) Date de publication et mention de la délivrance du brevet: **27.08.1997**
(21) Numéro de dépôt: 93913089.4
(22) Date de dépôt: 04.06.1993
(51) Int. Cl.: G06K 13/08

(54) **RECEPTEUR DE CARTE PERMETTANT L'EJECTION D'UNE CARTE CASSEE ET LECTEUR DE CARTE L'UTILISANT**
KARTENAUFNAHME MIT AUSWURF ZERISSENER KARTEN UND MIT DIESER KARTENAUFNAHME AUSGESTATTETER KARTENLESER
CARD RECEIVER ALLOWING FOR THE EJECTION OF A BROKEN CARD, AND CARD READER PROVIDED THEREWITH

(30) Priorité: 04.06.1992 FR 9206781
(43) Date de publication de la demande: 22.03.1995
(73) Titulaire: SOCIETE D'APPLICATIONS GENERALES D'ELECTRICITE ET DE MECANIQUE SAGEM, F-75783 Paris Cédex 16 (FR)
(72) Inventeur: MERLIN, Bruno, F-95100 Argenteuil (FR); QUINTANA, Jean, F-95000 Cergy (FR)
(74) Mandataire: Bloch, Gérard
(86) Numéro de dépôt international: FR9300533
(87) Numéro de publication internationale: WO9325977

(56) Documents cités:
- EP-A- 0 348 929
- EP-A- 0 351 103
- DE-A- 3 602 668

## Description

La présente invention concerne un récepteur de carte support d'informations comportant une fente d'introduction ménagée entre deux lèvres, avec une lèvre d'appui, et concerne aussi un lecteur de carte utilisant un tel récepteur.

On connaît déjà de tels récepteurs de carte pouvant être associés à un dispositif de lecture des informations portées par ladite carte.

Ainsi, les appareils téléphoniques publics à paiement par carte comportent une fente où est introduite une carte à puce, qui reste partiellement accessible à l'utilisateur. Cette fente est implantée au fond d'une cavité située en face avant de l'appareil, et un volet doit être rabattu devant cette cavité pour autoriser la communication téléphonique. Une telle disposition a pour but d'éviter, dans la mesure du possible, que la carte soit cassée au ras de la fente, ce qui en empêche l'extraction et met hors service l'appareil téléphonique.

Ceci n'est pas cependant d'une efficacité totale et, en particulier, ne protège pas contre les actes volontaires de vandalisme.

Par ailleurs, la lecture de la carte est assurée par un dispositif de lecture dont une interface de lecture comporte un capteur, tel qu'optique, magnétique, ou électrique avec prise de contacts sur la carte.

Or cette carte peut ne pas occuper exactement la position voulue, si son utilisateur appuie dessus fortement, ce qui va créer une erreur de lecture. Il y est remédié en imposant ladite fermeture du volet, mais ceci est une contrainte gênante, qui nécessite, de plus, une alarme telle que sonore pour éviter l'oubli de la carte.

Dans la demande de brevet DE-A-3 602 668, il est décrit un récepteur de carte support d'informations comportant une fente d'introduction ménagée entre deux lèvres, une de ces lèvres étant une lèvre d'appui, des moyens de cintrage de la carte disposés, dans la direction d'introduction de la carte, au-delà de cette lèvre d'appui, des moyens de guidage du bord antérieur de ladite carte pour amener la carte en position de lecture, et des moyens de réception, en position de lecture, du bord antérieur de la carte, comportant une paroi de butée agencée pour être déplacée dans la direction d'introduction de la carte sous l'action d'une poussée de la carte et contre l'action de premiers moyens de rappel, les moyens de cintrage étant agencés pour exercer sur la carte une force sensiblement perpendiculaire aux faces de la carte, la plaquant sur ladite lèvre d'appui.

La présente invention vise à résoudre ces problèmes.

A cet effet, le récepteur de carte support d'informations, selon l'invention est caractérisé par le fait qu'en position de lecture la carte conserve la possibilité de recevoir une poussée supplémentaire, cette poussée supplémentaire permettant à une carte cassée au ras de la fente d'introduction de quitter la lèvre d'appui et que, dès que la carte a échappé à la lèvre d'appui, les moyens de cintrage agissant contre l'action des moyens de guidage éjectent la carte hors du trajet d'introduction.

Ainsi, une carte peut venir occuper sa position de lecture tout en conservant la possibilité de recevoir une poussée supplémentaire lui faisant quitter le contact avec ladite lèvre d'appui.

Grâce à l'invention, si le détenteur de la carte la casse au ras de la fente, il suffit de pousser son bord cassé dans la direction d'introduction, par tout moyen approprié tel, par exemple, une autre carte, pour que, dès que la carte cassée a échappé à la lèvre d'appui, les moyens de cintrage exercent leur action sur la carte cassée et l'éjectent hors du trajet d'introduction, par exemple dans un réceptacle de retenue.

La paroi de butée peut comporter une articulation élastique ayant le rôle desdits moyens de rappel. On peut ainsi réaliser très simplement cette articulation élastique sous la forme d'un ressort à lame faisant partie intégrante de cette paroi de butée.

De façon alternative, ledit organe de réception peut être monté sur les moyens de rappel. Ceux-ci peuvent ainsi avoir toute forme voulue et éventuellement porter d'autres éléments, qui suivent ainsi le déplacement de l'organe de réception.

Les moyens de cintrage peuvent comporter une pièce dont une extrémité est disposée et orientée de façon à appuyer sur une face de la carte lors de son introduction. On peut ainsi réaliser très facilement le cintrage puisqu'il peut être effectué au moyen d'une pièce statique.

Les moyens de cintrage peuvent aussi comporter un ressort à lame recourbé recevant en pincement le bord antérieur de la carte. En fin de course, celle-ci est ainsi introduite en force dans ce ressort à lame recourbé et est pincée entre deux contacts, sensiblement parallèles à la lèvre d'appui et non face-à-face, de façon à assurer une rotation de la carte cassée lorsque celle-ci quitte la lèvre d'appui, ce qui l'éjecte de sa position de lecture.

Avantageusement, ledit ressort à lame des moyens de cintrage constitue ladite paroi de butée. Ainsi, une même pièce assure à la fois la butée et l'éjection de la carte cassée.

Le moyen de guidage peut être réalisé en utilisant ledit ressort à lame des moyens de cintrage. Le nombre de pièces est ainsi limité.

Des seconds moyens de rappel, tendant à repousser la carte hors dudit organe de réception, peuvent être prévus. Ils facilitent la sortie d'une carte cassée de cet organe de réception et évitent ainsi son blocage éventuel.

La paroi interne dudit récepteur de carte située près de la lèvre d'appui peut être au moins partiellement tournée vers la direction d'éjection des cartes cassées. Cette disposition est particulièrement avantageuse lorsqu'existent lesdits seconds moyens de rappel, qui poussent alors une carte cassée sur cette paroi interne dont l'orientation facilite le guidage de la carte cassée hors de sa position de lecture.

Le positionnement précis de l'organe de réception peut être assuré par une pièce de butée sur laquelle vient porter cet organe de réception lorsqu'il revient vers la position de lecture de la carte, après avoir été repoussé. On évite ainsi la vibration de cet organe de réception, les moyens de rappel exerçant éventuellement une force appliquant l'organe de réception sur cette pièce de butée.

Un lecteur de carte selon l'invention, comportant un récepteur de carte et une interface de lecture de ladite carte, est caractérisé par le fait que le récepteur de carte est tel que décrit ci-dessus relativement à l'invention, et par le fait que l'interface de lecture de carte est solidaire de l'organe de réception.

La position relative entre l'interface de lecture de carte et la carte elle-même est ainsi fixe lorsque la carte est enfoncée par rapport à sa position de lecture, ce qui évite des erreurs de lecture même lorsqu'on appuie sur la tranche accessible de la carte introduite.
L'invention sera mieux comprise à l'aide de la description suivante de modes préférés de réalisation du récepteur de carte selon l'invention, en référence au dessin en annexe, sur lequel :
la figure 1 est une vue latérale en coupe montrant un premier exemple de réalisation d'un récepteur de carte et d'un lecteur de carte l'utilisant,
la figure 2 est une vue latérale en coupe montrant un second exemple de réalisation de ce récepteur et du lecteur,
la figure 3 est une vue latérale partielle en coupe dudit récepteur, montrant l'éjection d'une carte cassée dans le récepteur représenté sur la figure 2,
la figure 4 est une vue arrière d'un troisième mode de réalisation comportant un chariot mobile pouvant recevoir une carte et porter un lecteur de carte,
la figure 5 est une vue latérale de ce chariot et
la figure 6 est une vue de dessus de ce chariot.

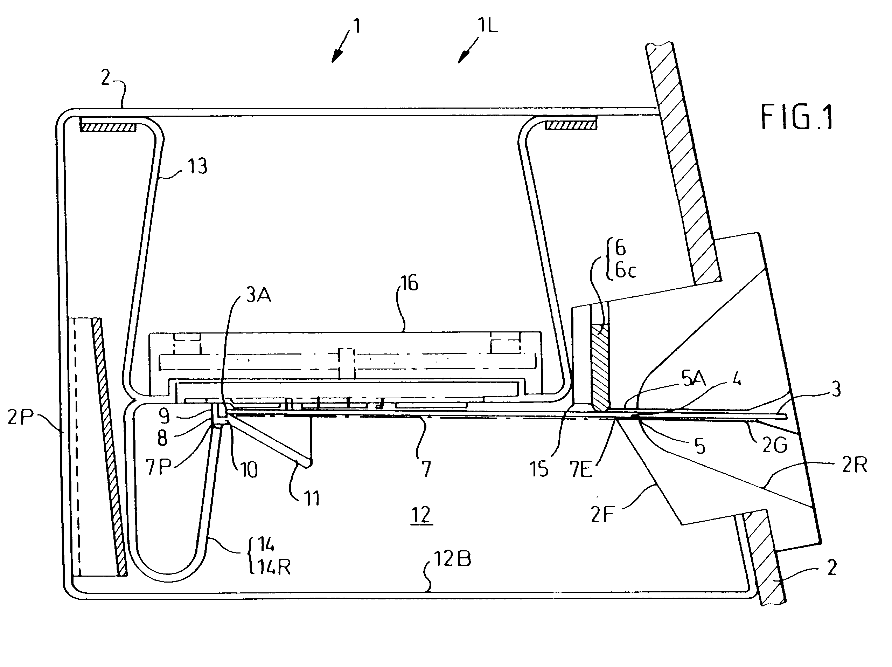

Le premier mode de réalisation d'un récepteur de carte 1 selon l'invention et d'un lecteur de carte 1L selon l'invention l'utilisant est représenté sur la figure 1. Le récepteur de carte 1 est constitué d'un boîtier 2 pouvant recevoir une partie d'une carte 3 d'épaisseur déterminée et comportant divers organes destinés à recevoir cette carte 3. Ce boîtier 2 comporte:
- une fente 4, délimitée par deux lèvres, respectivement 5 et 5A, dont l'une, 5, sert de lèvre d'appui pour une carte 3 traversant cette fente 4, qui, dans cet exemple, est implantée au fond d'un réceptacle 2R comportant deux glissières latérales 2G ayant le rôle annexe de guider la carte 3 ; - des moyens de cintrage 6, disposés dans la direction d'introduction de la carte 3 et au-delà de la lèvre d'appui 5, exerçant, sur la carte 3, une force sensiblement perpendiculaire aux faces de la carte 3, la plaquant sur ladite lèvre d'appui 5, ces moyens de cintrage 6 étant constitués d'une pièce de cintrage 6C, en matériau plastique dans cet exemple, placée de façon telle que son extrémité accessible se trouve sensiblement sur le trajet d'introduction de la carte 3, ladite extrémité présentant une forme en pente, telle que biseau ou arrondi, par rapport à ladite direction d'introduction de la carte 3, permettant au bord antérieur 3A de cette carte 3, lors de son introduction, de passer en bout de l'extrémité de cette pièce de cintrage 6C et d'en recevoir une force d'appui sur cette carte 3 tendant à cintrer la carte 3 vers la lèvre d'appui 5 ;
- un logement 7, dont une extrémité antérieure 7E est située en regard de ladite fente 4, ayant une forme aplatie lui permettant de recevoir cette carte 3 lorsqu'elle a été introduite, par son bord antérieur 3A, par glissement à travers la fente 4, et ayant une première position pour laquelle la carte 3 peut avoir un traitement, c'est-à-dire être lue par le lecteur de carte 1L associé ;
- un organe de réception 8 ;
- une paroi de butée 9, faisant partie de cet organe de réception 8, délimitant une extrémité postérieure 7P du logement 7 opposée à ladite extrémité antérieure 7E, contre laquelle vient buter le bord antérieur 3A de la carte 3 ;
- un second appui 10 pour ladite carte 3, faisant aussi partie de cet organe de réception 8, délimitant partiellement ledit logement 7 et tourné comme la lèvre d'appui 5, s'étendant sensiblement parallèlement à ladite lèvre d'appui 5, distant de celle-ci selon la direction d'introduction de la carte 3 et implanté à proximité de ladite extrémité postérieure 7P du logement 7 ;
- des moyens de guidage 11 destinés à guider la carte 3 vers le second appui 10, lors de l'introduction de celle-ci, et implantés à proximité de ce second appui 10, ces moyens de guidage 11 comportant un plan incliné par rapport à la direction d'introduction de la carte 3, d'angle et de longueurs telles qu'il ramène le bord antérieur 3A de la carte 3 vers le second appui 10 lorsque la carte 3 est enfoncée dans la fente 4 qui n'assure qu'un guidage peu précis du fait de la taille limitée de ses bords, en particulier si les glissières latérales 2G sont absentes, et du fait des moyens de cintrage 6 qui tendent à dévier la carte 3 hors du logement 7 ;
- une cavité 12, apte à recevoir une carte 3 cassée et à empêcher son retour vers le logement 7, cette cavité 12 étant implantée, par rapport au logement 7, du côté opposé à celui vers lequel sont tournés la lèvre d'appui 5 et le second appui 10, c'est-à-dire étant, dans cet exemple, sous le logement 7 et
- des premiers moyens de rappel 13, solidaires du boîtier 2 et de ladite paroi de butée 9, permettant un recul de celle-ci sous l'effet d'un enfoncement supplémentaire de la carte 3 par rapport à la première position, ledit logement 7 occupant alors une seconde position, la course desdits premiers moyens de rappel 13 étant supérieure à ladite largeur de la lèvre d'appui 5 selon la direction d'introduction de la carte 3, ces premiers moyens de rappel 13 étant, dans cet exemple, constitués d'un ressort à lame.

La paroi interne 2F du boîtier 2 située au niveau de la lèvre d'appui 5, du côté de la cavité 12, est tournée vers la face 12B de cette cavité 12 opposée au logement 7.

Il peut être prévu, comme dans cet exemple, des seconds moyens de rappel 14, tels un ressort à lame 14R replié en épingle à cheveux, dont une extrémité est solidaire de la paroi de butée 9 et dont la branche correspondante vient buter sur la paroi postérieure 2P du boîtier 2 lorsque cette paroi de butée 9 passe dans sa seconde position, alors que l'extrémité de la seconde branche est située au niveau de la paroi de butée 9 et mobile par rapport à celle-ci dans la direction d'introduction de la carte 3, et remplit la même fonction que celle-ci, mais vis-à-vis de la carte 3.

Par ailleurs, ladite paroi de butée 9 vient buter sur une pièce de butée 15, solidaire du boîtier 2, lorsqu'elle atteint sa première position à partir de sa seconde position. Un lecteur de carte 1L utilisant ce récepteur de carte 1 est aussi représenté sur cette figure 1. Il comporte une interface de lecture 16, tel que lecteur optique ou contacteur électrique, implantée en face du logement 7, sur sa face opposée à la cavité 12, c'est-à-dire la face supérieure. Cette interface de lecture 16 est solidaire de la paroi de butée 9.

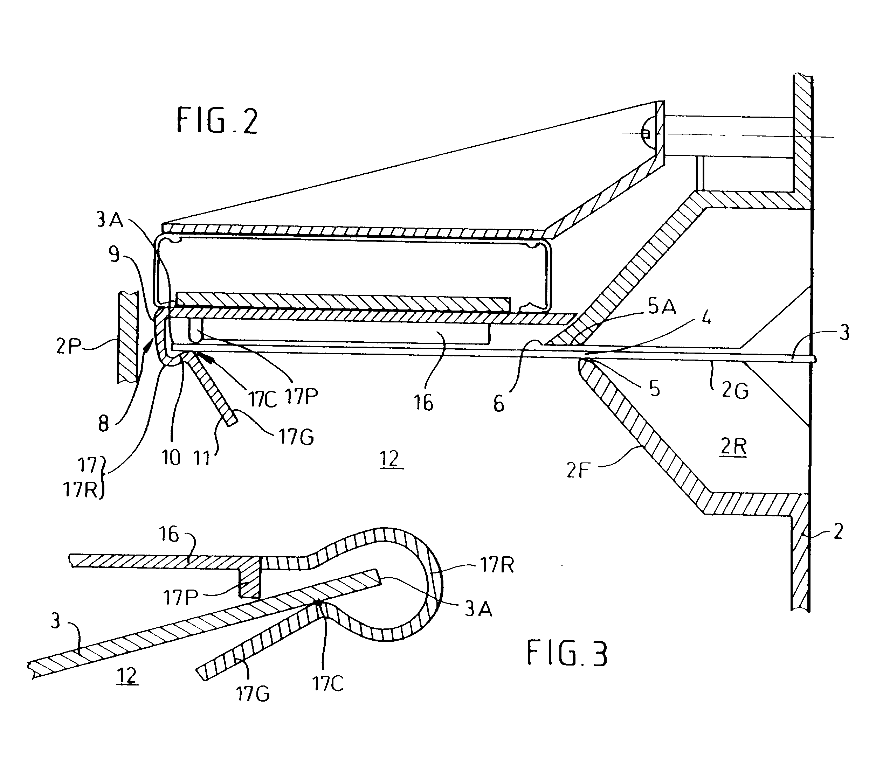

Dans le second mode de réalisation représenté sur les figures 2 et 3, apparaissent les mêmes éléments que ceux cités en regard de la figure 1, avec les mêmes références et la même fonction, si ce n'est que la fonction de la pièce de cintrage 6C est intégrée dans la lèvre 5A et qu'est implanté un moyen de pincement élastique 17 constitué d'un ressort à lame 17R replié qui est situé au niveau de la paroi de butée 9 et qui est solidaire de celle-ci. Dans cet exemple, la paroi de butée 9 a même été remplacée par ce moyen de pincement élastique 17, dont la forme repliée définit une forme en creux comportant une ouverture tournée vers la fente 4 et pouvant recevoir, entre deux lèvres sensiblement parallèles à la lèvre d'appui 5, le bord antérieur 3A de la carte 3, qui, alors, agrandit un peu cette ouverture en repoussant légèrement le point de contact 17C du ressort à lame 17R avec la carte 3, situé du côté de la cavité 12. La carte 3 est plaquée sur la face opposée à la cavité 12 sur une protubérance 17P solidaire du moyen de pincement élastique 17, le point de contact 17C de ce moyen de pincement élastique 17 avec la carte 3 étant plus proche de la paroi de butée 9 que ne l'est le point de contact de ladite protubérance 17P avec la carte 3, ce qui entraîne un effet de cintrage de la carte 3, dû à cette protubérance 17P, par rapport au point de contact 17C. Le ressort à lame 17R de ce moyen de pincement élastique 17 peut se prolonger, comme dans cet exemple, selon une forme présentant un plan incliné 17G servant de moyens de guidage 11 de la carte 3, tels qu'exposés précédemment.

Pour la clarté de la figure, les seconds moyens de rappel 14 n'ont pas été représentés, mais ils pourraient aussi être implantés.

Le lecteur de carte 1L est implanté sensiblement de la même façon que sur la figure 1. Dans cet exemple particulier. ladite protubérance 17P solidaire du moyen de pincement élastique 17 est constituée par le flanc de l'interface de lecture 16 de ce lecteur de carte 1L qui est voisin de la paroi de butée 9.

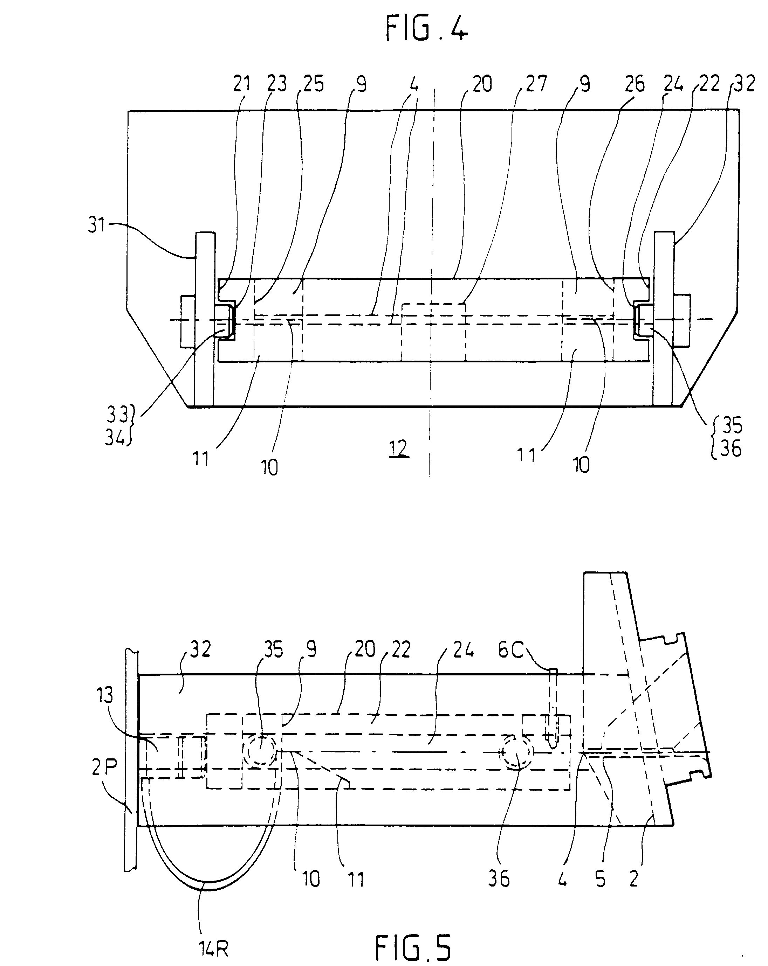

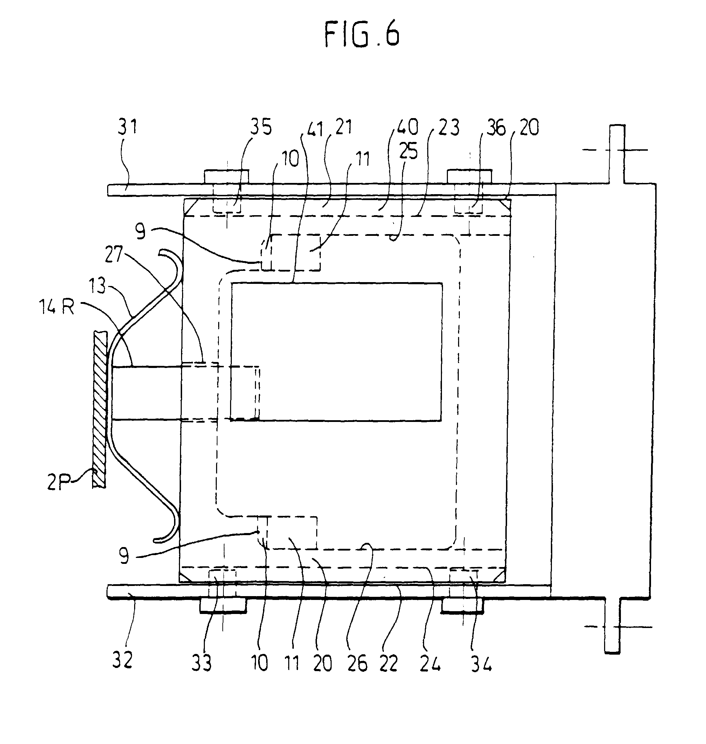

Les figures 4 et 5 montrent, vu respectivement à partir de la partie postérieure du récepteur de carte 1 et latéralement, un troisième mode de réalisation du récepteur de carte 1 selon l'invention, comportant un chariot 20 mobile, portant un élément de lecteur de carte, qui est porté et guidé par un bâti en forme d'étrier et se déplace sous l'effet d'un enfoncement d'une carte contre l'action d'un ressort à lame 13, tandis que des moyens de cintrage 6C portés par ce chariot 20 plaquent la carte 3 vers la face 12B de la cavité 12. Ce chariot 20 comporte deux flancs externes 21 et 22 opposés, s'étendant parallèlement à la direction d'introduction d'une carte 3 dans des plans perpendiculaires aux grandes faces d'une carte 3, comportent chacun respectivement une rainure 23 et 24 rectiligne orientée selon ladite direction d'introduction d'une carte 3. Le plan incliné 11 servant au guidage d'une carte 3 est réalisé sous la forme d'une paire de plans inclinés de taille restreinte situés près desdits flancs 21 et 22 du chariot 20, qui se poursuivent chacun par le second appui 10, dédoublé, et par la paroi de butée 9, aussi dédoublée. Les bords latéraux de la carte 3 sont guidés par deux flancs internes 25 et 26 du chariot 20, parallèles aux flancs 21 et 22. Ce chariot 20 comporte une rainure 27 au centre de sa face inférieure tournée vers la cavité 12, rainure 27 tournée vers cette cavité 12 et destinée à recevoir l'extrémité du ressort à lame 14R qui est prévue pour être en contact avec la carte 3, comme le montre la figure 6.

Deux bras 31 et 32, respectivement disposés parallèlement et contre les flancs externes 21 et 22, comportent chacun une paire de galets de glissement espacés 33, 34 et 35, 36 logée respectivement dans une desdites rainures 23 et 24, assurant ainsi le support du chariot 20 et son guidage dans la direction d'introduction d'une carte 3. Ces bras 31 et 32 sont raccordés à la paroi interne de la face avant du boîtier 2, de part et d'autre de la fente 4, près de chacune de ses extrémités.

La figure 6 est une vue de dessus de ce chariot 20 et des éléments associés décrits ci-dessus ainsi que d'une plaque 40 réceptacle de carte, venant le recouvrir exactement et formant la partie supérieure du logement 7. Une fenêtre 41 de cette plaque 40 permet l'accès à la carte 3 pour des moyens de lecture de celle-ci. Le ressort 14R pénètre dans la rainure 27 du chariot 20 pour venir au contact du bord antérieur 3A de la carte 3, tandis qu'une autre partie de ce ressort, appuyée sur la face interne de la paroi postérieure 2P du boîtier 2, joue le rôle du ressort 13 destiné à repousser le chariot 20.

Le fonctionnement du récepteur de carte 1 et du lecteur de carte 1L associé selon le premier mode de réalisation est le suivant. La carte 3 est introduite dans la fente 4 et enfoncée jusqu'à venir toucher la paroi de butée 9, en étant guidée vers celle-ci par les moyens de guidage 11. Lors de son trajet jusqu'au contact de son bord antérieur 3A avec la paroi de butée 9, la carte 3 vient au contact de la pièce de cintrage 6C, qui lui applique alors une force dirigée vers la cavité 12 et la cintre.

De son côté, la paroi de butée 9 peut reculer vers sa seconde position, et elle reprend sa première position, sous l'effet des premiers moyens de rappel 13, lorsque la carte 3 est relâchée par l'utilisateur. Il est à remarquer que la paroi de butée 9 peut elle-même comporter une articulation élastique ayant le rôle desdits premiers moyens de rappel 13, c'est-à-dire qu'un ressort à lame, dont une extrémité est solidaire du boîtier 2, peut servir d'organe de réception 8 ainsi que de premiers moyens de rappel 13. Comme l'interface de lecture 16 est solidaire de la paroi de butée 9, elle suit le déplacement de celle-ci et peut continuer à assurer correctement sa lecture même lors de ce déplacement.

Si la carte 3 est cassée au ras de la fente 4, ce qui interdit de pouvoir la retirer, un utilisateur peut utiliser une autre carte servant d'outil passant dans la fente 4 et poussant la tranche cassée de la carte 3. Celle-ci est alors repoussée hors du contact avec la lèvre d'appui 5, car l'enfoncement possible de la paroi de butée 9 est supérieur à la largeur de cette lèvre d'appui 5. Lorsque la carte outil est retirée, la carte 3 cassée tend à revenir vers la fente 4, sous l'effet des premiers moyens de rappel 13 ramenant la paroi de butée 9 vers la première position. Cependant, la libération de la carte 3 cassée de sa lèvre d'appui 5 permet aux moyens de cintrage 6, comportant ladite pièce de cintrage 6C, de faire pivoter cette carte 3 cassée autour du second appui 10, ce qui interdit à la carte 3 cassée de revenir sur cette lèvre d'appui 5. N'étant plus tenue aux deux extrémités du logement 7, elle continue à pivoter autour du second appui 10 et tombe par gravité dans la cavité 12. Dans le cas où les seconds moyens de rappel 14 sont implantés, ils contribuent à repousser la carte 3 cassée par rapport à la paroi de butée 9, ce qui facilite son éjection du logement 7. De plus, si ladite paroi interne 2F du boîtier 2 est inclinée comme indiqué, les seconds moyens de rappel 14 repoussent la tranche cassée de la carte 3 contre cette paroi interne 2F, qui, par réaction, tend à faire pivoter la carte 3, ce qui prolonge l'action des moyens de cintrage 6. Pour sa part, la pièce de butée 15 sert à assurer une position déterminée à la paroi de butée 9 et à amortir les déplacements dus aux vibrations.

Le fonctionnement du récepteur de carte 1 et du lecteur de carte 1L associé décrits en regard de la figure 2 suit un principe identique à celui exposé ci-dessus, certains des moyens étant réalisés différemment. Ainsi, les moyens de cintrage 6 ne comportent pas la pièce de cintrage 6C, mais sont constitués par la protubérance 17P, sur laquelle vient s'appliquer la carte lorsqu'elle vient au contact de la paroi de butée 9 en suivant les moyens de guidage 11, et le moyen de pincement élastique 17 constitué par le ressort à lame 17R replié, le guidage pouvant aussi être assuré par ce ressort à lame 17R.

Une carte 3 cassée est, après passage dans la seconde position, éjectée du logement 7 par l'action du ressort à lame 17R associé à la protubérance 17P, comme le montre la figure 3. Dans les réalisations exposées ci-dessus, la pièce de cintrage 6C peut avoir un rôle de balai empêchant la pénétration de poussières vers le lecteur de carte. De plus, un capteur, par exemple mécanique ou optique, peut aussi être implanté en amont de la pièce de cintrage 6C, pour commander celle-ci. Cette dernière, modifiée en conséquence, occupe au repos une position fermée empêchant le passage de tout objet. Lorsqu'une carte 3 est introduite dans le logement 7, elle est reconnue comme telle par le capteur, qui déverrouille alors la pièce de cintrage 6C, ce qui permet la poursuite du mouvement d'avance de la carte 3.

## Revendications

1. Récepteur de carte (1) support d'informations, comportant une fente (4) d'introduction ménagée entre deux lèvres (5, 5A), une de ces lèvres étant une lèvre d'appui (5), des moyens de cintrage (6, 17P) de la carte (3) disposés, dans la direction d'introduction de la carte (3), au-delà de cette lèvre d'appui (5), des moyens de guidage (11) du bord antérieur (3A) de ladite carte (3) pour amener la carte (3) en position de lecture, et des moyens de réception (8), en position de lecture, du bord antérieur (3A) de la carte (3), comportant une paroi de butée (9) agencée pour être déplacée dans la direction d'introduction de la carte (3) sous l'action d'une poussée de la carte (3) et contre l'action de premiers moyens de rappel (13), les moyens de cintrage (6, 17P) étant agencés pour exercer sur la carte (3) une force sensiblement perpendiculaire aux faces de la carte (3), la plaquant sur ladite lèvre d'appui (5), caractérisé par le fait qu'en position de lecture la carte conserve la possibilité de recevoir une poussée supplémentaire, cette poussée supplémentaire permettant à une carte cassée au ras de la fente d'introduction de quitter la lèvre d'appui, et que, dès que la carte a échappé à la lèvre d'appui, les moyens de cintrage agissant contre l'action des moyens de guidage (11) éjectent la carte (3) hors du trajet d'introduction.

2. Récepteur de carte selon la revendication 1, dans lequel la paroi de butée (9) comporte une articulation élastique ayant le rôle desdits premiers moyens de rappel (13).

3. Récepteur de carte selon la revendication 1, dans lequel ledit organe de réception (8) est monté sur les premiers moyens de rappel (13).

4. Récepteur de carte selon l'une des revendications 1 à 3, dans lequel les moyens de cintrage (6, 17P) comportent une pièce (6) dont une extrémité est disposée et orientée de façon à appuyer sur une face de la carte (3) lors de l'introduction de cette carte (3) dans ledit récepteur de carte (1).

5. Récepteur de carte selon l'une des revendications 1 à 4, dans lequel les moyens de cintrage (6, 17P) sont associés à un ressort à lame (17R) recourbé recevant en pincement le bord antérieur (3A) de la carte (3).

6. Récepteur de carte selon la revendication 5, dans lequel ledit ressort à lame (17R) associé aux moyens de cintrage constitue ladite paroi de butée (9).

7. Récepteur de carte selon l'une des revendications 5 et 6, dans lequel ledit ressort à lame (17R) associé aux moyens de cintrage fait office des moyens de guidage (11).

8. Récepteur de carte selon l'une des revendications 1 à 7, dans lequel des seconds moyens de rappel (14) tendent à repousser la carte (3) hors dudit organe de réception (8).

9. Récepteur de carte selon l'une des revendications 1 à 8, dans lequel la paroi interne (2F) dudit récepteur de carte (1) située près de la lèvre d'appui (5) est au moins partiellement tournée vers la direction d'éjection des cartes (3) cassées.

10. Récepteur de carte selon l'une des revendications 1 à 9, dans lequel une pièce de butée (15), sur laquelle vient porter cet organe de réception (8) lorsqu'il revient vers la position de lecture de la carte (3), après avoir été repoussé, est prévu pour assurer le positionnement précis de l'organe de réception (8).

11. Lecteur de carte (1L), comportant un récepteur de carte (1) et une interface de lecture (16) de ladite carte (3), caractérisé par le fait que le récepteur de carte (1) est tel que selon l'une des revendications 1 à 10 et par le fait que l'interface de lecture (16) de carte est solidaire de l'organe de réception (8).

## Patentansprüche

1. Aufnahmevorrichtung (1) für eine Daten tragende Karte, die folgendes aufweist:
einen Einführungsschlitz (4), der zwischen zwei Lippen (5, 5A) vorgesehen ist, von denen eine eine Auflagelippe (5) ist,
eine Einrichtung (6, 17P) zum Biegen der Karte (3), die in der Einführungsrichtung der Karte (3) hinter dieser Auflagelippe (5) angeordnet ist,
eine Einrichtung (11) zur Führung des vorderen Rands (3A) der Karte (3), um die Karte (3) in Lesestellung zu bringen,
und eine Einrichtung (8) zur Aufnahme des vorderen Rands (3A) der Karte (3) in Lesestellung, die eine Anschlagswand (9) aufweist, die dazu ausgebildet ist, unter der Wirkung eines von der Karte (3) ausgeübten Schubs und entgegen der Wirkung einer ersten Rückholeinrichtung (13) in der Einführungsrichtung der Karte (3) bewegt zu werden, wobei die Biegeeinrichtung (6, 17P) dazu ausgebildet ist, auf die Karte (3) eine zu den Seiten der Karte (3) im wesentlichen senkrechte Kraft auszuüben, die diese gegen die Auflagelippe (5) andrückt,
dadurch gekennzeichnet,
daß die Karte in Lesestellung die Möglichkeit beibehält, einen zusätzlichen Schub zu erhalten, der es einer auf Höhe des Einführungsschlitzes abgebrochenen Karte ermöglicht, die Auflagelippe zu verlassen,
und daß die entgegen der Wirkung der Führungseinrichtung (11) wirkende Biegeeinrichtung die Karte (3), sobald diese die Auflagelippe verlassen hat, aus der Einführungsbahn herausstößt.

2. Kartenaufnahmevorrichtung nach Anspruch 1, bei der die Anschlagswand (9) ein elastisches Gelenk aufweist, das die Funktion der ersten Rückholeinrichtung (13) besitzt.

3. Kartenaufnahmevorrichtung nach Anspruch 1, bei der das Aufnahmeorgan (8) auf der ersten Rückholeinrichtung (13) montiert ist.

4. Kartenaufnahmevorrichtung nach einem der Ansprüche 1 bis 3, bei der die Biegeeinrichtung (6, 17P) ein Teil (6) aufweist, von dem das eine Ende so angeordnet und gerichtet ist, daß es bei der Einführung der Karte (3) in die Kartenaufnahmevorrichtung (1) gegen eine Seite dieser Karte (3) drückt.

5. Kartenaufnahmevorrichtung nach einem der Ansprüche 1 bis 4, bei der die Biegeeinrichtung (6, 17P) einer gebogenen Blattfeder (17R) zugeordnet ist, die den vorderen Rand (3A) der Karte (3) klemmend aufnimmt.

6. Kartenaufnahmevorrichtung nach Anspruch 5, bei der die der Biegeeinrichtung zugeordnete Blattfeder (17R) die Anschlagswand (9) bildet.

7. Kartenaufnahmevorrichtung nach einem der Ansprüche 5 und 6, bei der die der Biegeeinrichtung zugeordnete Blattfeder (17R) die Führungseinrichtung (11) bildet.

8. Kartenaufnahmevorrichtung nach einem der Ansprüche 1 bis 7, bei der eine zweite Rückholeinrichtung (14) bestrebt ist, die Karte (3) aus dem Aufnahmeorgan (8) herauszudrücken.

9. Kartenaufnahmevorrichtung nach einem der Ansprüche 1 bis 8, bei der die in Nähe der Auflagelippe (5) gelegene innere Wand (2F) der Kartenaufnahmevorrichtung (1) mindestens teilweise der Ausstoßrichtung von zerbrochenen Karten (3) zugewandt ist.

10. Kartenaufnahmevorrichtung nach einem der Ansprüche 1 bis 9, bei der ein Anschlagteil (15) vorgesehen ist, an dem das Aufnahmeorgan (8) zur Anlage kommt, wenn es sich nach dem Zurückdrücken in die Lesestellung der Karte (3) zurückstellt, und das zum genauen Positionieren des Aufnahmeorgans (8) dient.

11. Kartenleser (1L) mit einer Kartenaufnahmevorrichtung (1) und einer Schnittstelle (16) zum Lesen der Karte (3),
dadurch gekennzeichnet,
daß die Kartenaufnahmevorrichtung (1) gemäß einem der Ansprüche 1 bis 10 ausgebildet ist und daß die Schnittstelle (16) zum Lesen der Karte mit dem Aufnahmeorgan (8) fest verbunden ist.

## Claims

1. Receiver (1) for a data carrier card, comprising an introduction slot (4) provided between two lips (5, 5A), one of these lips being a support lip (5), means (6, 17P) for bending the card (3), which are disposed, in the introduction direction of the card (3), beyond this support lip (5), means (11) for guiding the front edge (3A) of said card (3) in order to bring the card (3) into the reading position, and means (8) for receiving, in the reading position, the front edge (3A) of the card (3), comprising an abutment wall (9) arranged in order to be moved in the introduction direction of the card (3) under the action of pushing the card (3) and against the action of first return means (13), the bending means (6, 17P) being arranged to exert on the card (3) a force substantially perpendicular to the sides of the card (3), pushing it against said support lip (5), characterised by the fact that in the reading position the card retains the possibility of receiving an additional push, this additional push enabling a card broken level with the introduction slot to leave the support lip, and that, as soon as the card has escaped from the support lip, the bending means acting against the action of the guide means (11) eject the card (3) from the introduction path.

2. Receiver for a card according to Claim 1, in which the abutment wall (9) comprises a resilient articulation having the function of said first return means (13).

3. Receiver for a card according to Claim 1, in which said receiving member (8) is mounted on the first return means (13).

4. Receiver for a card according to one of Claims 1 to 3, in which the bending means (6, 17P) comprise a member (6) whereof one end is disposed and oriented in order to press on one side of the card (3) at the time of the introduction of this card (3) into said card receiver (1).

5. Receiver for a card according to one of Claims 1 to 4, in which the bending means (6, 17P) are associated with a curved leaf spring (17R) gripping the front edge (3A) of the card (3).

6. Receiver for a card according to Claim 5, in which said leaf spring (17R) associated with the bending means constitutes said abutment wall (9).

7. Receiver for a card according to one of Claims 5 and 6, in which said leaf spring (17R) associated with the bending means acts as guide means (11).

8. Receiver for a card according to one of Claims 1 to 7, in which second return means (14) tend to push the card (3) back out of said receiving member (8).

9. Receiver for a card according to one of Claims 1 to 8, in which the inner wall (2F) of said card receiver (1) situated close to the support lip (5) is at least partially turned towards the direction for ejection of broken cards (3).

10. Receiver for a card according to one of Claims 1 to 9, in which an abutment member (15), on which this receiving member (8) bears, when it returns towards the position for reading the card (3), after having been pushed back, is provided for ensuring the exact positioning of the receiving member (8).

11. Card reader (1L), comprising a card receiver (1) and an interface (16) for reading said card (3), characterised by the fact that the card receiver (1) is in accordance with one of Claims 1 to 10 and by the fact that the interface (16) for reading the card is integral with the receiving member (8).
